# EUROPÄISCHE PATENTSCHRIFT

(11) **EP 1 144 874 B1**
(45) Veröffentlichungstag und Bekanntmachung des Hinweises auf die Patenterteilung: **25.02.2004**
(21) Anmeldenummer: 99953370.6
(22) Anmeldetag: 21.05.1999
(51) Int. Cl.: F16B 5/07, H05K 5/00

(54) **VORRICHTUNG ZUM VERBINDEN ZWEIER TEILE**
SYSTEM FOR CONNECTING TWO PARTS
SYSTEME POUR ASSEMBLER DEUX PARTIES

(30) Priorität: 23.05.1998 DE 19823177
(43) Veröffentlichungstag der Anmeldung: 17.10.2001
(73) Patentinhaber: ROBERT BOSCH GMBH, 70442 Stuttgart (DE)
(72) Erfinder: JUNG, Oliver, D-42279 Wuppertal (DE); NITZSCHE, Hartmut, D-77815 Bühl (DE); SEIBERT, Heinz, D-77855 Achern (DE); KÜNZEL, Gerald, D-77815 Bühl (DE); SEEBACHER, Hans-Peter, D-76534 Baden-Baden (DE); WIELAND, Bernd, D-76571 Gaggenau (DE); LITTERST, Peter, D-77855 Achern (DE); LINDE, Hansjürgen, D-96450 Coburg (DE); NEUMANN, Uwe, D-96050 Bamberg (DE)
(86) Internationale Anmeldenummer: PCT/DE1999/001527
(87) Internationale Veröffentlichungsnummer: WO 1999/061806

(56) Entgegenhaltungen:
- DE-A- 3 047 133
- DE-A- 3 305 645
- DE-A- 3 815 927
- DE-B- 1 118 134

## Beschreibung

### Stand der Technik

Die Erfindung geht aus von einer Vorrichtung zum Verbinden zweier Teile.

Aus DE 38 15 927 A1 ist eine derartige Vorrichtung zum Verbinden der Formteile eines Formteilpaares bekannt, welche an ihren einander zugewandten Seiten ineinandergreifende Rastelemente aufweisen. Jedes Formteil besitzt ein als zweizinkige Gabel ausgebildetes Haltearmpaar mit einem an jedem Haltearm vorgesehenen Rastnocken. Das Haltearmpaar des einen Formteils ist: in das Haltearmpaar des anderen Formteils einsteckbar. Dabei überwinden sich die nach außen gerichteten Rastnocken des einen Haltearmpaars und die nach innen gerichteten Rastnocken des anderen Haltearmpaars gegenseitig, um sich in der Endlage beider Formteile zu hintergreifen. Zusätzlich sind an den beiden Formteilen neben den Haltearmen des einen Haltearmpaars und zwischen den Haltearmen des anderen Haltearmpaars jeweils ein Führungssteg mit Auflageschräge beziehungsweise Auflageschrägen vorgesehen zur Führung und seitlichen Abstützung der freien Haltearmenden. Damit ist bei der bekannten Vorrichtung der gegenseitige Rasteingriff der beiden Formteile des Formteilpaares in einer einzigen, festgelegten Raststellung gegeben.

Eine bekannte Vorrichtung zur lagesicheren Verbindung zweier Bauteile, die im Abstand voneinander angeordnete Halteränder an in einer gemeinsamen Ebene liegenden Oberflächen aufweisen (DE 30 47 133 A1) umfaßt zwei Verbindungselemente, die in die Halteränder der Bauteile eingesetzt werden und sich dabei gegenseitig überlappen. die Verbindungselemente weisen im Überlappungsbereich aneinanderliegende Rast- und Gegenrastmittel in Form von Zahnungen und Rastzungen auf, die einen Rasteingriff in unterschiedlichen gegenseitigen Abständen der beiden Bauteile ermöglichen.

Bei einem Elektromotor mit einem Gehäusezylinder und mindestens einem stirnseitigen Deckel zum Verschließen einer Stirnöffnung des Gehäusezylinders (DE 33 05 645 A1) ist es bekannt, den Deckel durch eine Rastverbindung zu befestigen. Die Rastverbindung weist hierzu zwei sich axial zum Gehäusezylinder erstreckende, ineinander rastbare Zahnreihen auf, wobei eine erste Zahnreihe an dem Deckel und eine zweite Zahnreihe an dem Gehäusezylinder angeordnet ist.

### Vorteile der Erfindung

Die erfindungsgemäße Verbindungsvorrichtung mit den Merkmalen des Anspruchs 1 hat den Vorteil, daß die Verbindung der beiden Teile mit einer definierten Positionierung der axialen Lage der beiden Teile zueinander möglich ist und somit bei Ausführung der beiden Teile als Gehäuse und Stirndeckel eines Elektromotors das Ankerlängsspiel des in einem deckelseitigen Lager aufgenommenen Ankers oder Rotors des Elektromotors fest eingestellt werden kann. Das Vorsehen zweier Verbindungspaare mit einander entgegengesetzten Einschwenkrichtungen der Laschen in die zugeordneten Ausschnitte ermöglicht dabei eine feinfühlige Justierung und eine zuverlässig sichere, endgültige Festlegung der beiden Teile in gewünschter Relation zueinander.

Durch die in den weiteren Ansprüchen aufgeführten Maßnahmen sind vorteilhafte Weiterbildungen und Verbesserungen der im Anspruch 1 angegebenen Verbindungsvorrichtung möglich.

### Zeichnng

Die Erfindung ist anhand eines in der Zeichnung dargestellten Ausführungsbeispiels in der nachfolgenden Beschreibung näher erläutert. Es zeigen:
- Fig. 1: eine Draufsicht eines Gehäuses und eines Stirndeckels eines Elektromotors vor der gegenseitigen Verbindung mittels einer Verbindungsvorrichtung,
- Fig. 2: eine gleiche Darstellung wie in Fig. 1 nach Verbindung von Gehäuse und Stirndeckel,
- Fig. 3: ausschnittweise einen Schnitt längs der Linie III-III in Fig. 2,
- Fig. 4: eine vergrößerte Darstellung des Ausschnitts IV in Fig. 2.

### Beschreibung des Ausführungsbeispiels

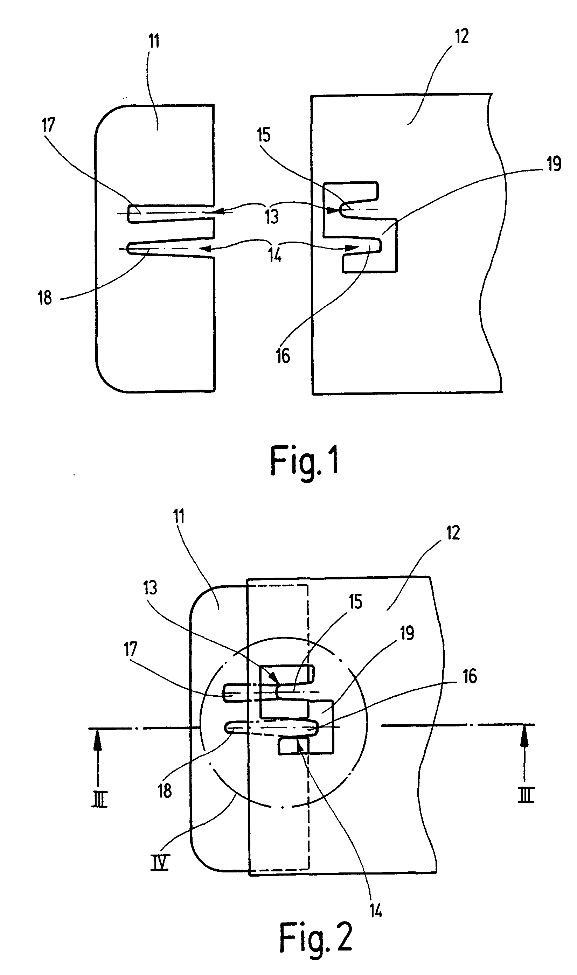

Mit der in Fig. 1 - 4 dargestellten Vorrichtung zum Verbinden zweier Teile wird ein kappenförmiger Stirndeckel 11 an einem zylinderförmigen Gehäuse 12 eines Elektromotors befestigt, wobei der Stirndeckel 11 im Bereich seines Kappenrandes von dem Gehäuse 12 übergriffen wird, wie dies aus Fig. 2 hervorgeht. Über dieses spezielle Ausführungsbeispiel hinaus kann die Verbindungsvorrichtung aber auch zum Verbinden von zwei beliebigen Teilen verwendet werden.

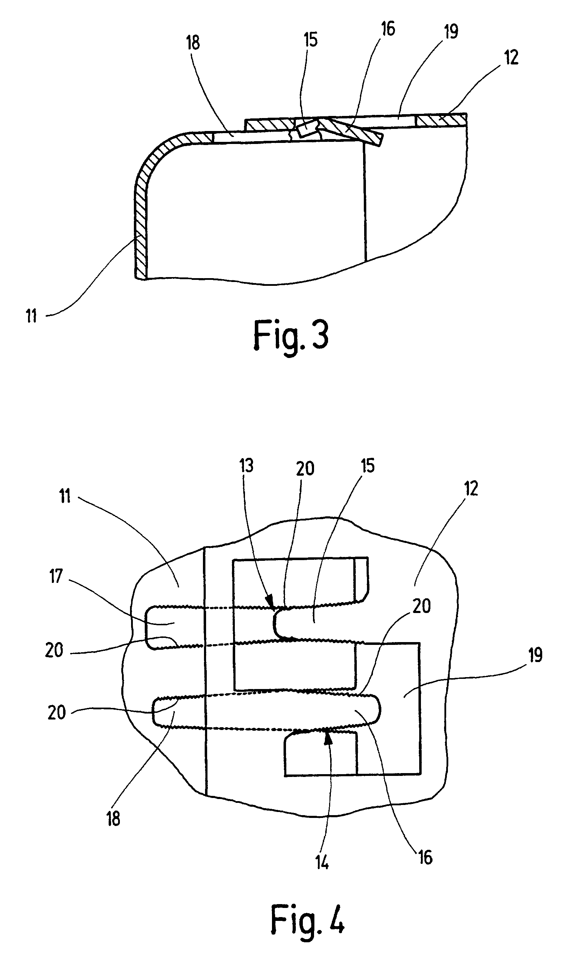

Die Verbindungsvorrichtung, die im speziellen Fall der Verbindung von Gehäuse 12 und Stirndeckel 11 an diametralen Stellen von Gehäuse 12 und Stirndeckel mindestens 11 zweimal vorhanden ist, umfaßt zwei Verbindungspaare 13,14 aus jeweils einer dem einen Teil zugeordneten, in Verbindungsrichtung sich erstreckenden, keilförmigen Lasche 15 bzw. 16 und einem den anderen Teil zugeordneten, in Verbindungsrichtung sich erstreckenden, keilförmigen Ausschnitt 17 bzw. 18, der einen zur Lasche 15 gegensinnigen Keilverlauf aufweist. Im speziellen Ausführungsbeispiel sind die beiden Laschen 15,16 der Verbindungspaare 13,14 dem Gehäuse 12 und die beiden keilförmigen Ausschnitte 17,18 dem Stirndeckel 11 zugeordnet, und zwar derart, daß sie im Überlappungsbereich von Stirndeckel 11 und Gehäuse 12 und die Laschen 15,16 über den Ausschnitten 17,18 liegen. Dabei sind die Ausschnitte 17,18 im Kappenrand des kappenförmigen Stirndeckels 11 parallel zueinander mit entgegengesetztem Keilverlauf ausgebildet, so daß an dem kreisringförmigen, dem Gehäuse 12 zugekehrten Stirnende des kappenförmigen Stirndeckels 11 der keilförmige Ausschnitt 17 seine kleinste Keilbreite und der keilförmige Ausschnitt 18 seine größte Keilbreite besitzt. Die beiden keilförmigen Laschen 15,16 sind mit etwas Abstand von dem dem Stirndeckel 11 zugekehrten, kreisringförmigen Stirnende des Gehäuses 12 im Gehäusemantel so freigestanzt, daß die jeweils von der Laschenwurzel ausgehenden, keilförmigen Verjüngungen an den beiden Laschen 15,16 entgegengesetzt verlaufen. Auch die beiden Laschen 15,16 sind parallel zueinander mit in Verbindungsrichtung entgegengesetzter Erstreckungsrichtung angeordnet, wobei die Laschen 15,16 sich jeweils entgegengesetzt von der Laschenwurzel bis zum freien Laschenende verjüngen. Die nach Freistanzen der beiden keilförmigen Laschen 15,16 im Gehäusemantel verbleibende Öffnung 19 wird als Belüftungsloch für den Elektromotor verwendet. Wie aus Fig. 4 hervorgeht, können die Laschen 15,16 und die Ausschnitte 17,18 längs ihrer Außenkonturen mit einer Mikroverzahnung 20 versehen werden, um den gegenseitigen Eingriff von Laschen 15,16 und Ausschnitte 17,18 zu verbessern.

Zum Herstellen der Verbindung werden nunmehr nach Einschieben des Stirndeckels 11 in das Stirnende des Gehäuses 12 die beiden keilförmigen Laschen 15,16 in die zugeordneten Ausschnitte 17,18 unter Verformung der Laschen 15,16 eingedrückt, wie dies in Fig. 3 dargestellt ist. Da dabei die Einschwenkrichtungen der Laschen 15,16 in die zugeordneten Ausschnitte 17,18 in Verbindungsrichtung gesehen einander entgegengesetzt sind, ist am Ende des Eindrückvorgangs der Laschen 15,16 der Stirndeckel 11 am Gehäuse 12 in einer axial richtigen Zuordnung zuverlässig fixiert. Die Keilform der Laschen 15,16 und der Ausschnitte 17,18 ermöglicht es dabei, die relative Lage von Stirndeckel 11 und Gehäuse 12 zueinander in Axialrichtung gesehen zu variieren und damit das axiale Spiel eines im Stirndeckel 11 lagermäßig aufgenommenen Ankers oder Rotors des Elektromotors hochfein und fest einzustellen.

Die nach Festlegung des Stirndeckels 11 im Gehäuse 12 durch die keilförmigen Ausschnitte 17,18 hindurchragenden freien Enden der Laschen 15,16 können noch zusätzlich zum Befestigen weiterer Komponenten innerhalb des Gehäuses 12 verwendet werden.

Die Erfindung ist nicht auf das beschriebene Ausführungsbeispiel einer Verbindung eines Stirndeckels 11 mit einem Gehäuse 12 beschränkt. Vielmehr können beliebige Teile mit der beschriebenen Verbindungsvorrichtung aneinander positionsgenau festgelegt werden. Auch ist es nicht erforderlich, die Laschen und Ausschnitte in den beiden Teilen selbst auszubilden. Diese Laschen und Ausschnitte können vielmehr auch in separate Verbindungselemente eingearbeitet werden, die in geeigneter Weise an den beiden zu verbindenden Teilen festgelegt werden, z.B. durch Einhängen in die beiden Teile, wie dies in der DE 30 47 133 A1 beschrieben ist, oder durch einstückiges Ausbilden solcher Verbindungselemente an den beiden Teilen.

## Patentansprüche

1. Vorrichtung zum Verbinden zweier Teile, insbesondere Gehäuseteile (11, 12), mit zwei Verbindungspaaren (13, 14) aus jeweils einer dem einen Teil (12) zugeordneten, in Verbindungsrichtung sich erstreckenden, keilförmigen Lasche (15, 16) und einem clem anderen Teil (11) zugeordneten, in Verbindungsrichtung sich erstreckenden, keilförmigen Ausschnitt (17, 18), **gekennzeichnet durch** einen zur Lasche (15, 16) gegensinnigen Keilverlauf des Ausschnitts (17, 18), in den die Lasche (15, 16) unter Verformung eindrückbar ist, und **durch** eine Ausrichtung der Verbindungspaare (13, 14) derart, daß die Eindrückrichtungen der Laschen (15, 16) in die zugeordneten Ausschnitte (17, 18) in Verbindungsrichtung gesehen einander entgegengesetzt sind.

2. Vorrichtung nach Anspruch 1, **dadurch gekennzeichnet, daß** die Ausschnitte (17, 18) der Verbindungspaare (13, 14) dem einen Teil (11) zugeordnet und parallel zueinander mit entgegengesetztem Keilverlauf angeordnet sind und daß die sich von der Laschenwurzel zum freien Laschenende hin verjüngenden, keilförmigen Laschen (15,16) dem anderen Teil (12) zugeordnet und parallel zueinander mit in Verbindungsrichtung entgegengesetzter Erstreckungsrichtung angeordnet sind.

3. Vorrichtung nach Anspruch 1 oder 2, **dadurch gekennzeichnet, daß** in die Außenkonturen der Laschen (15,16) und Ausschnitte (17,18) jeweils eine Mikroverzahnung (20) eingearbeitet ist.

4. Vorrichtung nach einem der Ansprüche 1 - 3, **dadurch gekennzeichnet, daß** mit den durch die Ausschnitte (17,18) hindurchtretenden, freien Laschenenden weitere Komponenten befestigbar sind.

5. Vorrichtung nach Anspruch 1 oder 2, **dadurch gekennzeichnet, daß** die Teile (11,12) sich an der Verbindungsstelle überlappen und die Laschen (15,16) und Ausschnitte (17,18) im Überlappungsbereich in den Teilen (11,12) selbst ausgebildet sind.

6. Vorrichtung nach Anspruch 5, **dadurch gekennzeichnet, daß** die Laschen (15,16) in dem einen Teil (12) so freigestanzt sind, daß die jeweils von den Laschenwurzeln ausgehenden keilförmigen Verjüngungen an den beiden Laschen (15,16) entgegengesetzt verlaufen.

7. Vorrichtung nach Anspruch 5 oder 6, **gekennzeichnet durch** die Verwendung zum Verbinden eines zylinderförmigen Gehäuses (12) eines Elektromotors mit einem kappenförmigen Stirndeckel (11), indem die Laschen (15,16) im Gehäuse (12) und die Ausschnitte (17, 18) im Kappenrand des in das Stirnende des Gehäuses (12) einsetzbaren Stirndeckels (11) ausgebildet sind.

8. Vorrichtung nach Anspruch 7, **dadurch gekennzeichnet, daß** die Laschen (15,16) in dem Mantel des Gehäuses (12) so freigestanzt sind, daß die entstehende Öffnung (19) ein Belüftungsloch für die Motorbelüftung bildet.

## Claims

1. Device for connecting two parts, in particular housing parts (11, 12), having two connecting pairs (13, 14) each comprising a wedge-shaped tongue (15, 16) which is assigned to the one part (12) and extends in the connecting direction, and a wedge-shaped cutout (17, 18) which is assigned to the other part (11) and extends in the connecting direction, **characterized by** a wedge profile of the cutout (17, 18) which is opposed to the tongue (15, 16) and into which the tongue (15, 16) can be pressed under deformation, and by an alignment of the connecting pairs (13, 14) in such a manner that the directions in which the tongues (15, 16) are pressed into the associated cutouts (17, 18) are opposed to each other, as seen in the connecting direction.

2. Device according to Claim 1, **characterized in that** the cutouts (17, 18) of the connecting pairs (13, 14) are assigned to the one part (11) and are arranged parallel to each other with an opposed wedge profile, and **in that** the wedge-shaped tongues (15, 16), which taper from the tongue root towards the free tongue end, are assigned to the other part (12) and are arranged parallel to each other with an opposite direction of extent in the connecting direction.

3. Device according to Claim 1 or 2, **characterized in that** a microtoothing (20) is incorporated in each case into the outer contours of the tongues (15, 16) and cutouts (17, 18).

4. Device according to one of Claims 1-3, **characterized in that** further components can be fastened to the free tongue ends which pass through the cutouts (17, 18).

5. Device according to Claim 1 or 2, **characterized in that** the parts (11, 12) overlap at the connecting point, and the tongues (15, 16) and cutouts (17, 18) are formed in the parts (11, 12) themselves in the overlapping region.

6. Device according to Claim 5, **characterized in that** the tongues (15, 16) are punched out in the one part (12) in such a manner that the wedge-shaped taperings, which start in each case from the tongue roots, run in an opposed manner on the two tongues (15, 16).

7. Device according to Claim 5 or 6, **characterized by** being used to connect a cylindrical housing (12) of an electric motor to a cap-shaped end cover (11) by the tongues (15, 16) being formed in the housing (12) and the cutouts (17, 18) being formed in the cap edge of the end cover (11) which can be inserted into the end of the housing (12).

8. Device according to Claim 7, **characterized in that** the tongues (15, 16) are punched out in the casing of the housing (12) in such a manner that the opening (19) which is produced therefrom forms a ventilation hole for ventilating the motor.

## Revendications

1. Dispositif d'assemblage de deux pièces, en particulier des pièces d'un boîtier (11, 12) comprenant deux paires d'assemblage (13, 14), chacune ayant respectivement une collerette (15, 16) cunéiforme s'étendant dans la direction d'assemblage et associée à une pièce (12), et une section (17, 18) cunéiforme s'étendant dans la direction d'assemblage et associée à l'autre pièce (11),
**caractérisé par**
un tracé cunéiforme de la section (17, 18) en sens contraire par rapport à la collerette (15, 16), tracé cunéiforme dans lequel on peut enfoncer la collerette (15, 16) par déformation, et par une orientation des paires d'assemblage (13, 14) de telle sorte que les directions d'enfoncement des collerettes (15, 16) sont opposées l'une par rapport à l'autre dans les sections associées (17, 18), dans le sens de la direction d'assemblage.

2. Dispositif selon la revendication 1,
**caractérisé en ce que**
les sections (17, 18) des paires d'assemblage (13, 14) sont associées à une pièce (11) et disposées parallèlement l'une par rapport à l'autre avec un tracé cunéiforme opposé, et les collerettes (15, 16) cunéiformes rétrécissant depuis la racine des collerettes jusque vers l'extrémité libre des collerettes sont associées à l'autre pièce (12) et disposées parallèlement l'une par rapport à l'autre avec une direction de prolongement opposée à la direction d'assemblage.

3. Dispositif selon la revendication 1 ou 2,
**caractérisé en ce que**
dans les contours extérieurs des collerettes (15, 16) et des sections (17, 18), on a chaque fois une micro-denture (20) usinée.

4. Dispositif selon une des revendications 1 à 3,
**caractérisé en ce que**
d'autres composants peuvent être fixés avec les extrémités libres de collerette pénétrant à travers les sections (17, 18).

5. Dispositif selon la revendication 1 ou 2,
**caractérisé en ce que**
les pièces (11, 12) se chevauchent au niveau du point d'assemblage et les collerettes (15, 16) et les sections (17, 18) sont elles-mêmes configurées dans les pièces (11, 12) au niveau du chevauchement.

6. Dispositif selon la revendication 5,
**caractérisé en ce que**
les collerettes (15, 16) sont découpées librement dans une des pièces (12) de telle sorte que les rétrécissements cunéiformes partant respectivement des racines de collerette s'étendent de manière opposée sur les deux collerettes (15, 16).

7. Dispositif selon la revendication 5 ou 6,
**caractérisé par**
l'utilisation de l'assemblage d'un boîtier de forme cylindrique (12) d'un moteur électrique avec un couvercle frontal en forme de coupelle (11), les collerettes (15, 16) étant configurées dans le boîtier (12) et les sections (17, 18) étant configurées dans le bord de la coupelle (11) du couvercle frontal insérable dans l'extrémité frontale du boîtier (12).

8. Dispositif selon la revendication 7,
**caractérisé en ce que**
les collerettes (15, 16) dans l'enveloppe du boîtier (12) sont découpées librement de telle sorte que l'ouverture obtenue (19) forme un évent pour la ventilation du moteur.
